# EUROPEAN PATENT APPLICATION

(11) **EP 4 394 828 A2**
(43) Date of publication of application: **03.07.2024**
(21) Application number: 23220004.8
(22) Date of filing: 22.12.2023
(51) Int. Cl.: H01G 4/12, H01G 4/228, H01G 4/30, C04B 35/462, C04B 35/465

(54) **MULTILAYER ELECTRONIC COMPONENT**

(30) Priority: 29.12.2022 KR 20220188435
(71) Applicant: Samsung Electro-Mechanics Co., Ltd., Suwon-si, Gyeonggi-do (KR)
(72) Inventor: Kim, Jin Woo, Suwon-si, Gyeonggi-do (KR); Park, Moon Soo, Suwon-si, Gyeonggi-do (KR); Noh, Seung Hyun, Suwon-si, Gyeonggi-do (KR); Hwang, Moon Kyung, Suwon-si, Gyeonggi-do (KR); Kim, Chung Hwan, Suwon-si, Gyeonggi-do (KR); Kim, Hyun Woo, Suwon-si, Gyeonggi-do (KR)
(74) Representative: Grünecker Patent- und Rechtsanwälte PartG mbB

(57) **Abstract**

A multilayer electronic component includes a capacitance formation portion where the first and second internal electrodes overlap each other in a first direction, a first margin portion disposed on one side surface or the other side surface of the capacitance formation portion in a second direction and including one end of the first or second internal electrode. A dielectric layer includes a first region disposed at a center region of the dielectric layer included in the capacitance formation portion, and a second region included in the first margin portion. At least one element of Mg, Si, Al, Li, Cu, Na, Bi, Mn, Cr, V, Fe, Ni, Co, Sn, In, Ga, Zn, Pb, Ag, Pd, Pt, Ir, Ru, Os, Y, Er, Yb, Tb, Ho, Dy is included in the second region, and not substantially included in the first region.

## Description

### CROSS-REFERENCE TO RELATED APPLICATION(S)

This application claims benefit of priority to Korean Patent Application No. 10-2022-0188435 filed on December 29, 2022 in the Korean Intellectual Property Office, the disclosure of which is incorporated herein by reference in its entirety.

### TECHNICAL FIELD

The present disclosure relates to a multilayer electronic component.

### BACKGROUND

A multilayer ceramic capacitor (MLCC), one of multilayer electronic components, may be a chip-type condenser which is mounted on a printed circuit board of various electronic products, such as an imaging device such as a liquid crystal display (LCD) or a plasma display panel (PDP), a computer, a smartphone or a cellular phone, to charge or discharge electricity therein or therefrom.

The multilayer ceramic capacitor may include a capacitance formation portion in which internal electrodes overlap each other to form capacitance and a margin portion, which is the other region. A step difference between the capacitance formation portion and the margin portion may occur during compression and firing due to a difference in stacking degrees of the internal electrodes, and such a difference may structurally cause a weak portion of the margin portion.

In a prior art, there has been an attempt to solve this step difference by selectively assigning a step difference compensation pattern to the margin portion. In addition, an attempt has been made to adjust elements in the step difference compensation pattern to solve deterioration of a break down voltage (BDV) characteristic that occurs due to concentration of an electric field at a boundary between the margin portion and the capacitance formation portion. However, there is a limit to assigning a specialized characteristic to the margin portion by adjusting only a ratio of elements under a condition that types of the elements included in the step difference compensation pattern and a dielectric layer disposed in the capacitance formation portion are the same as each other.

### SUMMARY

An aspect of the present disclosure may provide a multilayer electronic component which may suppress deterioration of a break down voltage (BDV) characteristic that occurs in a process of forming a step difference compensation part to solve a step difference between the capacitance formation portion and margin portion thereof.

Another aspect of the present disclosure may provide a multilayer electronic component which may suppress deterioration of high-temperature reliability that occurs in the process of forming the step difference compensation part to resolve the step difference between the capacitance formation portion and the margin portion thereof.

However, the present disclosure is not limited to the description above, and may be more readily understood in the description of exemplary embodiments of the present disclosure.

According to an aspect of the present disclosure, a multilayer electronic component may include: a body having first and second surfaces opposing each other in a first direction, third and fourth surfaces connected to the first and second surfaces and opposing each other in a second direction, and fifth and sixth surfaces connected to the first to fourth surfaces and opposing each other in a third direction, and including a dielectric layer and first and second internal electrodes alternately disposed in the first direction while having the dielectric layer interposed therebetween; a first external electrode disposed on the third surface and connected to the first internal electrode; and a second external electrode disposed on the fourth surface and connected to the second internal electrode. The body may include a capacitance formation portion where the first and second internal electrodes overlap each other in the first direction, and a first margin portion disposed on one side surface or the other side surface of the capacitance formation portion in the second direction and including one end of the first or second internal electrode. The dielectric layer may include a first region disposed at a center region of the dielectric layer that is included in the capacitance formation portion, and a second region included in the first margin portion. At least one element of magnesium (Mg), silicon (Si), aluminum (Al), lithium (Li), copper (Cu), sodium (Na), bismuth (Bi), manganese (Mn), chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy) may be included in the second region, and may not be substantially included in the first region.

According to another aspect of the present disclosure, a multilayer electronic component may include: a body having first and second surfaces opposing each other in a first direction, third and fourth surfaces connected to the first and second surfaces and opposing each other in a second direction, and fifth and sixth surfaces connected to the first to fourth surfaces and opposing each other in a third direction, and including a dielectric layer and first and second internal electrodes alternately disposed in the first direction while having the dielectric layer interposed therebetween; a first external electrode disposed on the third surface and connected to the first internal electrode; and a second external electrode disposed on the fourth surface and connected to the second internal electrode. The body may include a capacitance formation portion where the first and second internal electrodes overlap each other in the first direction, a first margin portion disposed on one side surface or the other side surface of the capacitance formation portion in the second direction and including an end of the first or second internal electrode, and a second margin portion disposed on one surface or the other surface of the capacitance formation portion in the third direction. The dielectric layer may include a first region disposed at a center region of the dielectric layer that is included in the capacitance formation portion, a second region included in the first margin portion, and a third region included in the second margin portion. At least one element of silicon (Si), aluminum (Al), lithium (Li), copper (Cu), sodium (Na), bismuth (Bi), manganese (Mn), chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy) may be included in at least one of the second region and the third region, and may not be substantially included in the first region.

According to another aspect of the present disclosure, a multilayer electronic component may include: a body having first and second surfaces opposing each other in a first direction, third and fourth surfaces connected to the first and second surfaces and opposing each other in a second direction, and fifth and sixth surfaces connected to the first to fourth surfaces and opposing each other in a third direction, and including a dielectric layer and first and second internal electrodes alternately disposed in the first direction while having the dielectric layer interposed therebetween; a first external electrode disposed on the third surface and connected to the first internal electrode; and a second external electrode disposed on the fourth surface and connected to the second internal electrode. The body may include a capacitance formation portion where the first and second internal electrodes overlap each other in the first direction, and a second margin portion that is disposed on one surface or the other surface of the capacitance formation portion in the third direction. The dielectric layer may include a first region disposed at a center region of the dielectric layer that is included in the capacitance formation portion, and a third region included in the second margin portion. A content of one element of silicon (Si), aluminum (Al), lithium (Li), copper (Cu), sodium (Na), bismuth (Bi), manganese (Mn), chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy) included in the third region may be higher than a content of the one element included in the first region.

### BRIEF DESCRIPTION OF DRAWINGS

The above and other aspects, features and advantages of the present disclosure will be more clearly understood from the following detailed description taken in conjunction with the accompanying drawings, in which:
FIG. 1 is a perspective view schematically showing a multilayer electronic component according to exemplary embodiments of the present disclosure;
FIG. 2 is a cross-sectional view taken along line I-I' of FIG. 1;
FIG. 3 is a cross-sectional view taken along line II-II' of FIG. 1;
FIG. 4 is an exploded perspective view schematically showing a method of manufacturing a body according to still another exemplary embodiment of the present disclosure;
FIG. 5 is a perspective view schematically showing a ceramic multilayer body according to still another exemplary embodiment of the present disclosure;
FIG. 6 is an enlarged view of a region A of FIG. 2; and
FIG. 7 is an enlarged view of a region B of FIG. 3.

### DETAILED DESCRIPTION

Hereinafter, exemplary embodiments of the present disclosure will now be described in detail with reference to the accompanying drawings.

In the drawings, a first direction may be defined as a direction in which first and second internal electrodes are alternately disposed while having a dielectric layer interposed therebetween, or a thickness (T) direction, and a second direction may be defined as a length (L) direction, and a third direction may be defined as a width (W) direction. The second direction and the third direction may be perpendicular to the first direction.

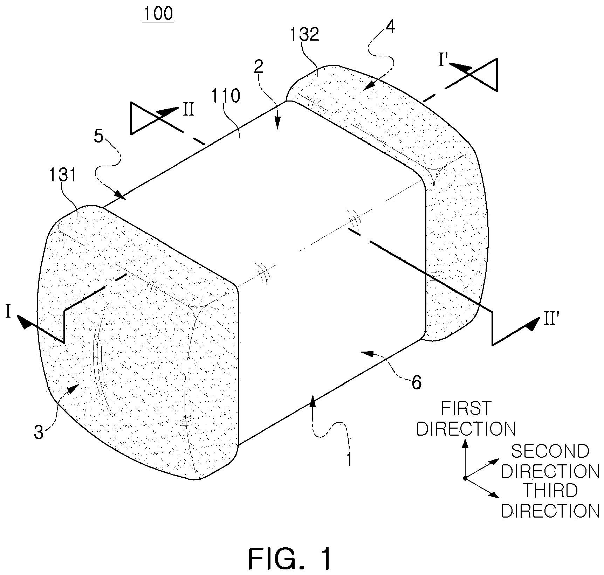

FIG. 1 is a perspective view schematically showing a multilayer electronic component according to exemplary embodiment of the present disclosure.

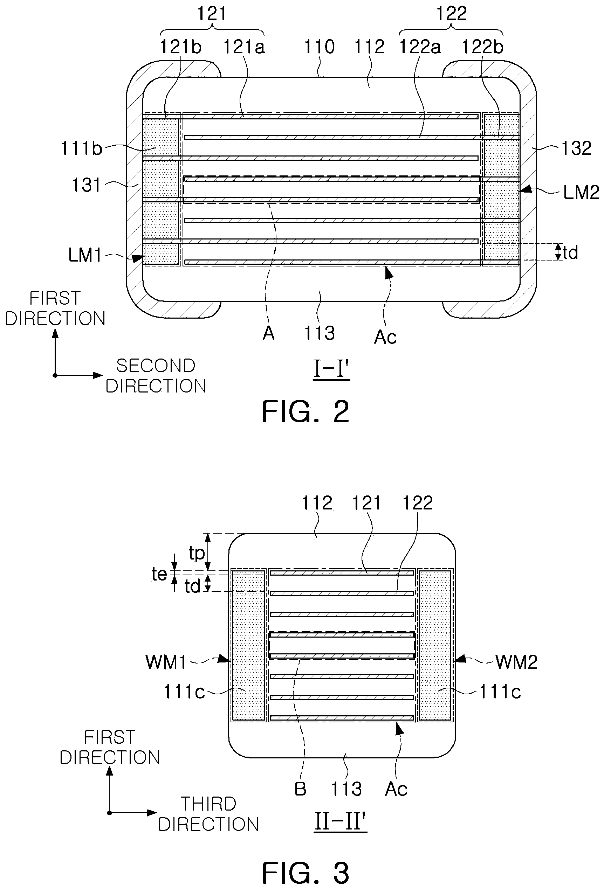

FIG. 2 is a cross-sectional view taken along line I-I' of FIG. 1.

FIG. 3 is a cross-sectional view taken along line II-II' of FIG. 1.

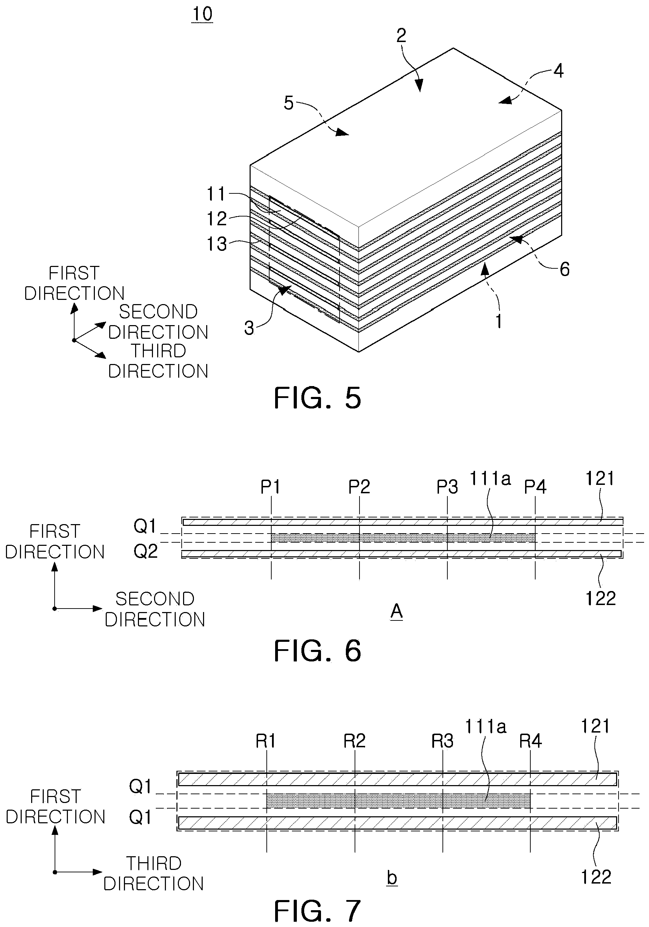

FIG. 6 is an enlarged view of a region A of FIG. 2, and FIG. 7 is an enlarged view of a region B of FIG. 3.

Hereinafter, the description describes each multilayer electronic component 100 according to an exemplary embodiment and another exemplary embodiment of the present disclosure with reference to FIGS. 1 through 3, 6 and 7.

According to an exemplary embodiment of the present disclosure, the multilayer electronic component 100 may include: a body 110 having first and second surfaces 1 and 2 opposing each other in the first direction, third and fourth surfaces 3 and 4 connected to the first and second surfaces and opposing each other in the second direction, and fifth and sixth surfaces 5 and 6 connected to the first to fourth surfaces 1 to 4 and opposing each other in the third direction, and including a dielectric layer and first and second internal electrodes 121 and 122 alternately disposed in the first direction while having the dielectric layer interposed therebetween; a first external electrode 131 disposed on the third surface 3 and connected to the first internal electrode 121; and a second external electrode 132 disposed on the fourth surface 4 and connected to the second internal electrode 122. When a capacitance formation portion Ac is a region of the body where the first and second internal electrodes overlap each other when viewed in the first direction, a first margin portion LM1 or LM2 is a region of the body that is disposed on one side surface or the other side surface of the capacitance formation portion Ac in the second direction and only including either one of ends 121b and 122b of the first and second internal electrodes 121 and 122, a first region 111a is a region disposed at a center of a region of the dielectric layer that is included in the capacitance formation portion Ac, and a second region 111b is a region of the dielectric layer that is included in the first margin portion LM1 or LM2, at least one element of magnesium (Mg), silicon (Si), aluminum (Al), lithium (Li), copper (Cu), sodium (Na), bismuth (Bi), manganese (Mn), chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy) may be included in the second region 111b, and may not be substantially included in the first region 111a.

The body 110 may include the dielectric layer and the first and second internal electrodes 121 and 122 alternately disposed in the first direction while having the dielectric layer interposed therebetween.

The body 110 is not limited to a particular shape, and may have a hexahedral shape or a shape similar to the hexahedral shape, as shown in the drawings. The body 110 may not have the hexahedral shape having perfectly straight lines due to contraction of ceramic powders included in the body 110 in a sintering process, and have substantially the hexahedral shape.

The body 110 may have the first and second surfaces 1 and 2 opposing each other in the first direction, the third and fourth surfaces 3 and 4 connected to the first and second surfaces 1 and 2 and opposing each other in the second direction, and the fifth and sixth surfaces 5 and 6 connected to the first and second surfaces 1 and 2, connected to the third and fourth surfaces 3 and 4, and opposing each other in the third direction.

The plurality of dielectric layers included in the body 110 may be in a sintered state, and adjacent dielectric layers may be integrated with each other so that boundaries therebetween are not readily apparent without using a scanning electron microscope (SEM).

According to an exemplary embodiment of the present disclosure, a raw material of the dielectric layer is not particularly limited as long as sufficient capacitance is obtained from the raw material. For example, the dielectric layer may use a material such as a barium titanate-based material, a lead composite perovskite-based material, a strontium titanate-based material or the like. The barium titanate-based material may include barium titanate (BaTiO₃)-based ceramic powders, and the ceramic powders may be, for example, BaTiO₃ or (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1) or Ba(Ti_{1-y}Zr_{y})O₃ (0<y<1), in which calcium (Ca), zirconium (Zr) or the like is partially dissolved in BaTiO₃.

In addition, the raw material of the dielectric layer may be prepared by adding various ceramic additives, organic solvents, binders, dispersing agents and the like, to the powders such as the barium titanate (BaTiO₃) powders, based on an object of the present disclosure.

Meanwhile, an average thickness td of the dielectric layer may not need to be particularly limited. For example, the average thickness td of the dielectric layer may be 0.2 um or more and 2 um or less.

The average thickness td of the dielectric layer may indicate the average thickness td of the dielectric layer disposed between the first and second internal electrodes 121 and 122.

The average thickness td of the dielectric layer may be measured by scanning an image of a cross section of the body 110 in a length-thickness (L-T) direction by using the scanning electron microscope (SEM) with a magnification of 10,000. In more detail, the average thickness value td of the dielectric layer may be measured by measuring a thickness of one dielectric layer at thirty equally spaced points in the length direction in the scanned image. The thirty equally spaced points may be designated in the capacitance formation portion Ac. In addition, it is possible to obtain the more general average thickness of the dielectric layer when measuring its average value by extending a measurement target of the average value to ten dielectric layers.

The internal electrodes 121 and 122 may be alternately disposed in the first direction while having the dielectric layer interposed therebetween.

The internal electrodes 121 and 122 may be the first internal electrode 121 and the second internal electrode 122. The first and second internal electrodes 121 and 122 may be alternately disposed to oppose each other while having the dielectric layer 111 included in the body 110 interposed therebetween, and may respectively be connected to the third and fourth surfaces 3 and 4 of the body 110. In detail, one end of the first internal electrode 121 may be connected to the third surface 3, and one end of the second internal electrode 122 may be connected to the fourth surface 4. That is, in an exemplary embodiment, the internal electrodes 121 and 122 may be in contact with the third surface 3 or the fourth surface 4.

The first internal electrode 121 may be spaced apart from the fourth surface 4 and exposed through the third surface 3, and the second internal electrode 122 may be spaced apart from the third surface 3 and exposed through the fourth surface 4. The first external electrode 131 may be disposed on the third surface 3 of the body to be connected to the first internal electrode 121, and the second external electrode 132 may be disposed on the fourth surface 4 of the body to be connected to the internal electrode 122.

That is, the first internal electrode 121 may not be connected to the second external electrode 132 and may be connected to the first external electrode 131, and the second internal electrode 122 may not be connected to the first external electrode 131 and may be connected to the second external electrode 132. Accordingly, the first internal electrode 121 may be spaced apart from the fourth surface 4 by a predetermined distance, and the second internal electrode 122 may be spaced apart from the third surface 3 by the predetermined distance. Here, the first and second internal electrodes 121 and 122 may be electrically isolated from each other by the dielectric layer interposed therebetween.

A material of the internal electrode 121 or 122 is not particularly limited, and may use a material having excellent electrical conductivity. For example, the internal electrode 121 or 122 may include at least one of nickel (Ni), copper (Cu), palladium (Pd), silver (Ag), gold (Au), platinum (Pt), tin (Sn), tungsten (W), titanium (Ti), and an alloy thereof.

In addition, the internal electrode 121 or 122 may be formed by printing, on a ceramic green sheet, a conductive paste for an internal electrode including at least one of nickel (Ni), copper (Cu), palladium (Pd), silver (Ag), gold (Au), platinum (Pt), tin (Sn), tungsten (W), titanium (Ti), and an alloy thereof. A method of printing the conductive paste for an internal electrode may be a screen printing method, a gravure printing method or the like, and the present disclosure is not limited thereto.

According to an exemplary embodiment of the present disclosure, the body 110 may include the capacitance formation portion Ac, and the first margin portions LM1 and LM2.

Referring to FIGS. 2 and 3, the capacitance formation portion Ac may be a region where the first and second internal electrodes overlap each other when viewed in the first direction. The capacitance formation portion may be a part that contributes to formation of a capacitance of the multilayer electronic component 100, and the dielectric layer may be disposed between the regions in which the first and second internal electrodes overlap each other. Meanwhile, referring to FIG. 2, a body part 121a or 122a of the internal electrode may define a region of the first or second internal electrode that is included in the capacitance formation portion, and an end 121b or 122b of the internal electrode may define a region of the first or second internal electrode which extends from the capacitance formation portion in the second direction to be in contact with one of the third surface or fourth surface of the body 110.

Referring to FIG. 2, the first margin portion LM1 or LM2 may be a region disposed on one surface or the other side surface of the capacitance formation portion Ac in the second direction and only including either one of the end 121b or 122b of the first and second internal electrodes. The first margin portion LM1 or LM2 may be a section formed by extending one of the first and second internal electrodes 121 and 122 in the second direction, and electrically connect the body 110 with the external electrode 131 or 132. In addition, the first margin portion LM1 or LM2 may protect the capacitance formation portion Ac from an external physical or chemical stress by allowing the capacitance formation portion Ac to be distant from the external electrode 131 or 132 by a predetermined distance. Meanwhile, the capacitance formation portion Ac may be formed by repeatedly stacking the first and second internal electrodes 121 and 122 while interposing the dielectric layer therebetween.

According to another exemplary embodiment of the present disclosure, the body 110 may include the capacitance formation portion Ac, the first margin portion LM1 or LM2, and a second margin portion WM1 or WM2.

The second margin portion WM1 or WM2 may be a region disposed on one surface or the other surface of the capacitance formation portion Ac in the third direction. The second margin portion may include the second margin portion WM1 disposed on the fifth surface 5 of the body 110 or the second margin portion WM2 disposed on the sixth surface 6 of the body 110. That is, the second margin portions WM1 and WM2 may be disposed on each of end surfaces of the body 110 in the third direction (or width direction).

As shown in FIG. 3, the second margin portion WM1 or WM2 may indicate a region between each of two ends of the first or second internal electrode 121 or 122 and a boundary surface of the body 110, based on a cross section of the body 110 cut in a width-thickness (W-T) direction.

The second margin portion WM1 or WM2 may basically prevent the internal electrode from being damaged due to the physical or chemical stress.

The second margin portion WM1 or WM2 may be formed by forming the internal electrode by applying the conductive paste on the ceramic green sheet except for its portion where the margin portion is to be formed.

Alternatively, in order to suppress a step difference occurring due to the internal electrode 121 or 122, the second margin portion WM1 or WM2 may be formed by stacking the internal electrodes on each other, then cutting the internal electrodes to be exposed to the fifth or sixth surface 5 or 6 of the body, and then stacking one dielectric layer or two or more dielectric layers on each of two side surfaces of the capacitance formation portion Ac in the third direction (or width direction).

Meanwhile, an average width of the second margin portion WM1 or WM2 may not need to be particularly limited. However, 15 pm or less may be the average width of the margin portion WM1 or WM2 in order for the multilayer electronic component to more easily have a smaller size and a higher capacitance.

The average width of the second margin portion WM1 or WM2 may indicate its average size in the third direction, and may have a value obtained by averaging the sizes of the second margin portions WM1 or WM2 in the third direction, measured at five equally spaced points on the side surface of the capacitance formation portion Ac.

In an exemplary embodiment, an upper cover portion 112 may be disposed on one surface of the capacitance formation portion Ac in the first direction, and a lower cover portion 113 may be disposed on the other surface of the capacitance formation portion Ac in the first direction.

The upper cover portions 112 and the lower cover portion 113 may respectively be formed by stacking one dielectric layer or two or more dielectric layers on the upper and lower surfaces of the capacitance formation portion Ac in the thickness direction, and may basically prevent the internal electrodes from being damaged due to the physical or chemical stress.

The upper and lower cover portion 112 or 113 may include no internal electrode, and may include the same material as the dielectric layer 111.

That is, the upper or lower cover portion 112 or 113 may include a ceramic material and include, for example, a barium titanate (BaTiO₃)-based ceramic material.

Meanwhile, an average thickness of the cover portion 112 or 113 may not need to be particularly limited. However, 15 um or less may be an average thickness tp of the cover portion 112 or 113 in order for the multilayer electronic component to more easily have the smaller size and the higher capacitance.

The average thickness of the cover portion 112 or 113 may indicate its size in the first direction, and may have a value obtained by averaging the sizes of the cover portion 112 or 113 in the first direction, measured at five equally spaced points on upper or lower surface of the capacitance formation portion Ac.

The external electrode 131 or 132 may be disposed on the third surface 3 or the fourth surface 4 of the body 110. The external electrodes 131 and 132 may be the first and second external electrodes 131 and 132 respectively disposed on the third and fourth surfaces 3 and 4 of the body 110, and respectively connected to the first and second internal electrodes 121 and 122.

This exemplary embodiment describes that the multilayer electronic component 100 includes two external electrodes 131 and 132. However, the number, shape or the like of the external electrode 131 or 132 may depend on a shape of the internal electrode 121 or 122 or another purpose.

Meanwhile, the external electrode 131 or 132 may be made of any material having the electrical conductivity, such as a metal, may use a specific material determined in consideration of electrical characteristics, structural stability or the like, and may have a multilayer structure.

For example, the external electrode 131 or 132 may include an electrode layer disposed on the body 110 and a plating layer formed on the electrode layer.

For a more specific example of the electrode layer, the electrode layer may be a fired electrode including a conductive metal and glass or a resin-based electrode including the conductive metal and the resin.

In addition, the electrode layer may have the fired electrode and the resin-based electrode, sequentially formed on the body. Alternatively, the electrode layer may be formed by transferring a sheet including the conductive metal to the body or by transferring the sheet including the conductive metal to the fired electrode.

The conductive metal included in the electrode layer may use the material having the excellent electrical conductivity, and is not particularly limited. For example, the conductive metal may be at least one of nickel (Ni), copper (Cu) and an alloy thereof.

The plating layer may improve a mounting characteristic of the multilayer electronic component. The plating layer is not limited to a particular type, may include at least one of nickel (Ni), tin (Sn), palladium (Pd) and an alloy thereof, or may include a plurality of layers.

For a more specific example of the plating layer, the plating layer may be a Ni plating layer or a Sn plating layer, may have the Ni plating layer and the Sn plating layer, sequentially formed on the electrode layer, or the Sn plating layer, the Ni plating layer, and the Sn plating layer sequentially formed on the electrode layer. In addition, the plating layer may include the plurality of Ni plating layers or the plurality of Sn plating layers.

Meanwhile, according to an exemplary embodiment of the present disclosure, the dielectric layer may be divided into regions distinguished based on its position.

In detail, in an exemplary embodiment of the present disclosure, the dielectric layer may be divided into a first region 111a disposed at a center of its region that is included in the capacitance formation portion Ac and a second region 111b included in the first margin portion LM1 or LM2.

A stacking degree of the internal electrodes 121 and 122 of the first margin portion LM1 or LM2 of the multilayer electronic component 100 may be different from that in the capacitance formation portion Ac. Therefore, when the internal electrodes 121 and 122 are alternately disposed in the first direction while having the dielectric layer interposed therebetween and subjected to compression and firing processes, the step difference may occur due to a difference in their shrinkage behaviors. In addition, a boundary of the capacitance formation portion Ac and the first margin portions LM1 or LM2 is a region where either end of the first internal electrode 121 or the second internal electrode 122 is disposed, and the electric field may thus be concentrated thereon. Accordingly, the multilayer electronic component 100 may have lower reliability.

A prior art attempts to suppress the concentration of the electric field at each end of the internal electrodes by forming a dielectric pattern for step difference resolution between the end of the first internal electrode and the fourth surface, and between the end of the second internal electrode and the third surface, and then adjusting a content of a specific metal element in the dielectric pattern for step difference resolution to be higher than that in the dielectric layer included in the capacitance formation portion. In addition, the prior art attempts to prevent the lower reliability of the multilayer electronic components by adjusting each content of silicon (Si), manganese (Mn) and rare earth elements, included in the margin portion and the capacitance formation portion, That is, the prior art attempts to suppress the lower reliability of the multilayer electronic component by adjusting a ratio of the corresponding elements in a state where a region of the dielectric layer that is included in the capacitance formation portion and a region of the dielectric layer that is included in the margin portion have the same elements added thereto.

Unlike the prior art in which only the contents of the elements are different from each other under a condition where types of the elements included in the respective regions of the dielectric layer included in the capacitance formation portion and the margin portion are the same as each other, the present disclosure aims to secure the multilayer electronic component to have higher reliability by allowing the types of some elements included in the region of the dielectric layer that is included in the capacitance formation portion Ac and the region of the dielectric layer that is included in the margin portion to be different from each other.

According to an exemplary embodiment of the present disclosure, at least one element of magnesium (Mg), silicon (Si), aluminum (Al), lithium (Li), copper (Cu), sodium (Na), bismuth (Bi), manganese (Mn), chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy) may be included in the second region 111b, and may not be substantially included in the first region 111a.

In this specification, an expression that the specific element is "not substantially included" in a specific region may indicate that the content of the specific element is less than 0.5 at% relative to a total content of all elements in the corresponding region. That is, this expression may indicate that the specific element is not included except for a case where the content of the element is measured as a noise level in a result obtained by measuring the content by using an element content measurement method such as a transmission electron microscope-energy dispersive x-ray spectroscopy (TEM-EDX).

At least one element of magnesium (Mg), silicon (Si), aluminum (Al), lithium (Li), copper (Cu), sodium (Na), bismuth (Bi), manganese (Mn), chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy) may be included in the second region 111b, and may not be substantially included in the first region 111a. In this way, it is possible to suppress a growth of a dielectric grain in the second region 111b to thus increase grain density in the boundary, thereby suppressing the deterioration of the break down voltage (BDV) characteristic due to the concentration of the electric field at any one end of the first and second internal electrodes 121 and 122, improve sinterability of the second region 111b to thus improve density of the first margin portion LM1 or LM2, thereby suppressing the deterioration of the BDV characteristic, or suppress deterioration of insulation resistance (IR) of the multilayer electronic component at a high temperature, thereby improving high accelerated life test (HALT) reliability of the multilayer electronic component.

FIG. 6 is an enlarged view of a region A of FIG. 2. Lines P1, P2, P3, and P4 in FIG. 6 are lines dividing the dielectric layer included in the capacitance formation portion into five parts in the second direction, and lines Q1 and Q2 are lines dividing the dielectric layer into three parts in the first direction. Referring to FIG. 6, the center where the first region 111a is disposed may be a region from 1/5 point (P1) to 4/5 point (P4) when the region of the dielectric layer that is included in the capacitance formation portion is divided into five parts in the second direction, and a region from 1/3 point (Q1) to 2/3 point (Q2) when the region of the dielectric layer that is included in the capacitance formation portion is divided into third parts in the first direction. That is, the first region 111a may indicate a region spaced apart from the first margin portion LM1 or LM2 and the internal electrode 121 or 122 at regular intervals. Meanwhile, FIG. 6 shows the dielectric layer disposed at the center of the capacitance formation portion in the first direction. However, the description of the center where the first region 111a is disposed may be similarly applied to any dielectric layer.

In an exemplary embodiment, magnesium (Mg) may be the element included in the second region 111b and not substantially included in the first region 111a. Accordingly, dielectric grains included in the second region 111b may be made finer than dielectric grains included in the first region 111a, thus alleviating the concentration of the electric field at either end of the first and second internal electrodes 121 and 122. Accordingly, the multilayer electronic component 100 may have an improved BDV characteristic.

According to an exemplary embodiment, when magnesium (Mg) is the element included in the second region 111b and not substantially included in the first region 111a, the second region 111b may further include titanium (Ti), and the content of magnesium (Mg) included in the second region 111b may be 1 mole or more and 5 moles or less relative to 100 moles of titanium (Ti). When the content of magnesium (Mg) included in the second region 111b is less than 1 mole relative to 100 moles of titanium (Ti), the dielectric grains of the second region 111b may be insufficiently refined, thus making it difficult to improve the BDV characteristic of the multilayer electronic component 100. On the other hand, when the content of magnesium (Mg) included in the second region 111b is more than 5 moles relative to 100 moles of titanium (Ti), magnesium (Mg) may be diffused into the first region 111a, thus deteriorating the BDV characteristic of the multilayer electronic component 100.

In an exemplary embodiment, at least one of silicon (Si), aluminum (Al), lithium (Li), copper (Cu), sodium (Na), and bismuth (Bi) may be the element included in the second region 111b and not substantially included in the first region 111a. At least one element of silicon (Si), aluminum (Al), lithium (Li), copper (Cu), sodium (Na), and bismuth (Bi) may be included in the second region 111b and not substantially included in the first region 111a, thus improving the density of the first margin portion LM1 or LM2 and suppressing the deterioration of the BDV characteristic of the multilayer electronic component 100.

In an exemplary embodiment, the second region 111b may further include titanium (Ti), and the content of at least one of silicon (Si), aluminum (Al), lithium (Li), copper (Cu), sodium (Na), and bismuth (Bi), included in the second region, may be 2 moles or more and 7 moles or less relative to 100 moles of titanium (Ti). When the content of at least one of silicon (Si), aluminum (Al), lithium (Li), copper (Cu), sodium (Na), and bismuth (Bi) is less than 2 moles relative to 100 moles of titanium (Ti), the dielectric grains of the second region 111b may be insufficiently refined, thus making it difficult to improve the BDV characteristic of the multilayer electronic component 100. On the other hand, when at least one of silicon (Si), aluminum (Al), lithium (Li), copper (Cu), sodium (Na), and bismuth (Bi) is more than 7 moles relative to 100 moles of titanium (Ti), at least one of silicon (Si), aluminum (Al), lithium (Li), copper (Cu), sodium (Na), and bismuth (Bi) may be diffused into the first region 111a, thus deteriorating the BDV characteristic of the multilayer electronic component 100.

In an exemplary embodiment, at least one of manganese (Mn), chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy) may be the element included in the second region 111b and not substantially included in the first region 111a. At least one of manganese (Mn), chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy) may be included in the second region 111b, and may not be substantially included in the first region 111a to thus suppress the deterioration of the insulation resistance (IR) at a high temperature, thereby improving the high accelerated life test (HALT) reliability of the multilayer electronic component.

In an exemplary embodiment, the second region 111b may further include titanium (Ti), and the content of at least one of manganese (Mn), chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy), included in the second region 111b, may be 1 mole or more and 3 moles or less relative to 100 moles of titanium (Ti).

For example, when the second region 111b further includes titanium (Ti), and the content of at least one of manganese (Mn), chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy), included in the second region 111b, is less than 1 mole relative to 100 moles of titanium (Ti), it may be insufficient to improve high-temperature reliability of the multilayer electronic component 100. On the other hand, when the content of at least one of manganese (Mn), chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy), included in the second region 111b, is more than 3 moles relative to 100 moles of titanium (Ti), at least one of manganese (Mn), chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy) may be diffused into the first region 111a, thus deteriorating the high-temperature reliability of the multilayer electronic component 100. In an exemplary embodiment, the multilayer electronic component 100 may secure the high-temperature reliability when manganese (Mn) is the element included in the second region 111b and not substantially included in the first region 111a. However, the multilayer electronic component 100 may also secure the improved high-temperature reliability when at least one of chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy) is the element included in the second region 111b and not substantially included in the first region 111a.

According to another exemplary embodiment of the present disclosure, a multilayer electronic component 100 may include: a body 110 having first and second surfaces 1 and 2 opposing each other in the first direction, third and fourth surfaces 3 and 4 connected to the first and second surfaces and opposing each other in the second direction, and fifth and sixth surfaces 5 and 6 connected to the first to fourth surfaces 1 to 4 and opposing each other in the third direction, and including a dielectric layer and first and second internal electrodes 121 and 122 alternately disposed in the first direction while having the dielectric layer interposed therebetween; a first external electrode 131 disposed on the third surface 3 and connected to the first internal electrode 121; and a second external electrode 132 disposed on the fourth surface 4 and connected to the second internal electrode 122. When a capacitance formation portion Ac is a region of the body where the first and second internal electrodes 121 and 122 overlap each other when viewed in the first direction, a first margin portion LM1 or LM2 is a region of the body that is disposed on one side surface or the other side surface of the capacitance formation portion Ac in the second direction and including an end 121b or 122b of the first or second internal electrode 121 or 122, a second margin portion WM1 or WM2 is a region of the body that is disposed on one surface or the other surface of the capacitance formation portion Ac in the third direction, a first region 111a is a region of the dielectric layer that is included in the capacitance formation portion Ac, a second region 111b is a region of the dielectric layer that is included in the first margin portion LM1 or LM2, and a third region 111c is a region of the dielectric layer that is included in the second margin portion WM1 or WM2, at least one element of silicon (Si), aluminum (Al), lithium (Li), copper (Cu), sodium (Na), bismuth (Bi), manganese (Mn), chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy) is included in at least one of the second region 111b and the third region 111c, and not substantially included in the first region 111a.

FIG. 7 is an enlarged view of a region B of FIG. 3. Lines R1, R2, R3, and R4 in FIG. 7 are lines dividing the dielectric layer included in the capacitance formation portion into five parts in the third direction, and lines Q1 and Q2 are lines dividing the dielectric layer into three parts in the first direction. Referring to FIG. 7, the center where the first region 111a is disposed may indicate a region from 1/5 point (R1) to 4/5 point (R4) when the region of the dielectric layer that is included in the capacitance formation portion Ac is divided into five parts in the third direction, and a region from point 1/3 (Q1) to point 2/3 (Q2) when the region of the dielectric layer that is included in the capacitance formation portion Ac divided into third parts in the first direction. Combining the description of FIG. 7 and the above description of FIG. 6, the center where the first region 111a is disposed may indicate the region from 1/5 point (R1) to 4/5 point (R4) when the region of the dielectric layer that is included in the capacitance formation portion Ac is divided into five parts in the second direction or the third direction, and the region from point 1/3 (Q1) to point 2/3 (Q2) when the region of the dielectric layer that is included in the capacitance formation portion Ac divided into third parts in the first direction. That is, the first region 111a may indicate a region spaced apart from the first margin portion LM1 or LM2, the second margin portion WM1 or WM2, and the internal electrode 121 or 122 at regular intervals. Meanwhile, FIG. 7 shows the dielectric layer disposed at the center of the capacitance formation portion Ac in the first direction. However, the description of the center where the first region 111a is disposed may be similarly applied to any dielectric layer.

In another exemplary embodiment of the present disclosure, the dielectric layer may be divided into a first region 111a disposed at a center of its region that is included in the capacitance formation portion Ac, a second region 111b included in the first margin portion LM1 or LM2, and a third region 111c included in the second margin portion WM1 or WM2.

According to another exemplary embodiment of the present disclosure, at least one of the second region 111b and the third region 111c may include at least one element not included in the first region 111a. Here, at least one of silicon (Si), aluminum (Al), lithium (Li), copper (Cu), sodium (Na), bismuth (Bi), manganese (Mn), chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy) may be the element included in at least one of the second region 111b and the third region 111c, and not substantially included in the first region 111a. In this way, it is possible to suppress a grain growth of a dielectric included in at least one of the second region 111b and the third region 111c to thus increase a specific gravity of a grain boundary, thereby suppressing deterioration of break down voltage (BDV) characteristic due to concentration of an electric field at either end of the first and second internal electrodes 121 and 122, improve sinterability of at least one of the second region 111b and the third region 111c to thus improve density of either the first margin portion LM1 or LM2 or the second margin portion WM1 or WM2, thereby suppressing the deterioration of the BDV characteristic, or suppress deterioration of insulation resistance (IR) of the multilayer electronic component at a high temperature, thereby improving high accelerated life test (HALT) reliability of the multilayer electronic component.

In another exemplary embodiment, the second region 111b or the third region 111c may further include titanium (Ti), and at least one of silicon (Si), aluminum (Al), lithium (Li), copper (Cu), sodium (Na), and bismuth (Bi) may be an element included in at least one of the second region 111b and the third region 111c and not substantially included in the first region 111a. It is thus possible to suppress the grain growth of the dielectric included in at least one of the second region 111b and the third region 111c to thus increase the specific gravity of the grain boundary, thereby suppressing the deterioration of the break down voltage (BDV) characteristic due to the concentration of the electric field at either end of the first and second internal electrodes 121 and 122.

Here, a content of at least one of silicon (Si), aluminum (Al), lithium (Li), copper (Cu), sodium (Na), and bismuth (Bi), included in the second region 111b, may be 2 moles or more and 7 moles or less relative to 100 moles of titanium (Ti).

In addition, the multilayer electronic component 100 may secure the same effect when silicon (Si) is the element included in at least one of the second region 111b and the third region 111c and not substantially included in the first region 111a. However, the multilayer electronic component 100 may also secure the same effect when at least one of aluminum (Al), lithium (Li), copper (Cu), sodium (Na), and bismuth (Bi) is the element included in at least one of the second region 111b and the third region 111c and not substantially included in the first region 111a.

In another exemplary embodiment, at least one of manganese (Mn), chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy) may be the element included in at least one of the second region 111b and the third region 111c, and not substantially included in the first region 111a. It is thus possible to improve the sinterability of at least one of the second region 111b and the third region 111c to thus improve the density of either the first margin portion LM1 or LM2 or the second margin portion WM1 or WM2, thereby suppressing the deterioration of the BDV characteristic.

Here, the content of at least one of manganese (Mn), chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy), included in at least one of the second region 111b and the third region 111c, may be 1 mole or more and 3 moles or less relative to 100 moles of titanium (Ti).

In addition, the multilayer electronic component 100 may secure the same effect when manganese (Mn) is the element included in at least one of the second region 111b and the third region 111c and not substantially included in the first region 111a. However, the multilayer electronic component 100 may also secure the same effect when at least one of chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy) is the element included in at least one of the second region 111b and the third region 111c and not substantially included in the first region 111a.

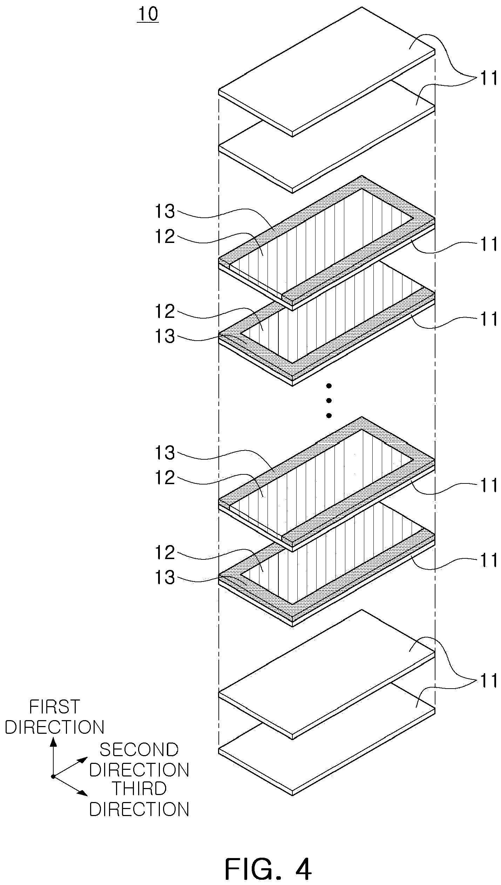

FIG. 4 is an exploded perspective view schematically showing a method of manufacturing a body according to still another exemplary embodiment of the present disclosure.

FIG. 5 is a perspective view schematically showing a ceramic multilayer body according to an exemplary embodiment of the present disclosure.

Hereinafter, the description describes an example of the method of manufacturing a body 110 of the present disclosure with reference to FIGS. 4 and 5.

Referring to FIG. 4, internal electrode patterns 12 may be formed on a dielectric ceramic green sheet 11, and a process of stacking and compressing the plurality of sheets may be performed to form a ceramic multilayer body 10 in a state before sintering the body 110. Here, the internal electrode patterns 12 may alternately expose one end and the other end in the second direction along the first direction without entirely covering the dielectric ceramic green sheet 11. The internal electrode pattern 12 may be fired to become first and second internal electrodes 121 and 122, and the dielectric ceramic green sheet 11 may be sintered to become a dielectric layer.

The dielectric ceramic green sheet 11 may include a raw material forming the dielectric layer. For example, the dielectric layer may use a material such as a barium titanate-based material, a lead composite perovskite-based material, a strontium titanate-based material, or the like. The barium titanate-based material may include barium titanate (BaTiO₃)-based ceramic powders, and the ceramic powders may be, for example, BaTiO₃ or (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1) or Ba(Ti_{1-y}Zr_{y})O₃ (0<y<1), in which calcium (Ca), zirconium (Zr) or the like is partially dissolved in BaTiO₃. In addition, various ceramic additives, organic solvents, binders, dispersants and the like, may be added to the ceramic powders based on a purpose of the present disclosure.

The internal electrode pattern 12 may include a material of the internal electrode 121 or 122. The internal electrode 121 or 122 may include at least one of nickel (Ni), copper (Cu), palladium (Pd), silver (Ag), gold (Au), platinum (Pt), tin (Sn), tungsten (W), titanium (Ti) and an alloy thereof, and may further include various additives as needed.

A compensation pattern 13 may be disposed on a region of the dielectric ceramic green sheet 11 where the internal electrode pattern 12 is not disposed. The compensation pattern 13 may include at least one element not included in the dielectric ceramic green sheet 11. The element included in the compensation pattern 13 and not included in the dielectric ceramic green sheet 11 may be at least one of magnesium (Mg), silicon (Si), aluminum (Al), lithium (Li), copper (Cu), sodium (Na), bismuth (Bi), manganese (Mn), chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy) as an exemplary embodiment of the present disclosure, or may be at least one of manganese (Mn), chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy) as another exemplary embodiment of the present disclosure. That is, the element included in the compensation pattern 13 and not included in the dielectric ceramic green sheet 11 may be adjusted to adjust the type and content of an element included in at least one of a second region 111b and a third region 111c.

The compensation pattern 13 may cover an entire portion of the dielectric ceramic green sheet 11 on which the internal electrode pattern 12 is not disposed. In detail, the compensation pattern 13 may cover the entire portion of the dielectric ceramic green sheet 11 on which the internal electrode pattern 12 is not disposed when the internal electrode pattern 12 is spaced apart from one end of the dielectric ceramic green sheet 11 in the second direction and both ends of the dielectric ceramic green sheet 11 in the third direction. Here, a distance between one end of the internal electrode pattern 12 in the second direction and one end of the dielectric ceramic green sheet in the second direction may be sintered to become a first margin portion LM1 or LM2, and a distance between one end of the internal electrode pattern 12 in the third direction and one end of the dielectric ceramic green sheet in the third direction may be sintered to become a second margin portion WM1 or WM2.

Meanwhile, the element in the compensation pattern 13 may be diffused into the dielectric ceramic green sheet 11 through a sintering process to form first to third regions 111a, 111b, and 111c of the dielectric layer. However, in the present disclosure, the element included in the compensation pattern 13 and not included in the dielectric ceramic green sheet 11 may not be diffused into the first region 111a of the dielectric layer that is included in a capacitance formation portion Ac during the sintering process, which may be adjusted by changing the distribution and sintering condition of the element included in the compensation pattern 13 and not included in the dielectric ceramic green sheet 11.

Meanwhile, the dielectric ceramic green sheet 11 on which the internal electrode pattern 12 is not disposed may be disposed at the top or bottom of the ceramic multilayer body 10, and sintered to become parts forming a cover portion 112 or 113.

Referring to FIG. 5, the ceramic multilayer body 10 may include the internal electrode pattern 12 and the dielectric ceramic green sheet 11 which are alternately disposed in the first direction to have first and second surfaces 1 and 2 opposing each other in the first direction, third and fourth surfaces 3 and 4 connected to the first and second surfaces 1 and 2 and opposing each other in the second direction, and fifth and sixth surfaces 5 and 6 connected to the first to fourth surfaces 1 to 4 and opposing each other in the third direction. The first to sixth surfaces in FIG. 5 may be sintered to become the first to sixth surfaces 1 to 6 of the body 110.

### (Inventive example)

Tables 1 to 3 show evaluation results of the BDV characteristic and high-temperature reliability of the multilayer electronic component 100 based on the content of the specific element included in the second region 111b of the dielectric layer and not included in the first region 111a. Evaluations in Tables 1 and 2 are prepared based on the second region 111b, and may also be applied to the third region 111c. That is, the same evaluations may be applied to a case where the specific element is included in the third region 111c and not included in the first region 111a.

Evaluations in Tables 1 to 3 are conducted using substantially the same samples except for the content of the specific element for each test number.

The content of the element included in the first region 111a or the second region 111b may be obtained by polishing the multilayer electronic component 100 to its center in the third direction to expose the cross sections in the first and second directions, then dividing the cross section in the first direction and the second direction into three parts, i.e., upper, lower, and middle parts, in the first direction, and then measuring an average value of the contents of the element at three or more 5 um x 5 um regions equally spaced from each other in each of the upper, lower, and middle parts in the second direction by using the transmission electron microscope-energy dispersive x-ray spectroscopy (TEM-EDX).

The break down voltage (BDV) is obtained by performing the measurement for 100 samples at 25°C and 100V/s step-up conditions, in which an average value of the break down voltages (BDV) is taken by measuring a voltage as the break down voltage when a value of the insulation resistance (IR) falls to 10000Ω or less at 20mA.

Mean time to failure (MTTF) is obtained by performing the measurement for 80 samples at 105°C and 8 Vr conditions, in which an average value of the mean time to failures (MTTF) is taken by measuring a time until the value of the insulation resistance (IR) falls to 10000 Ω or less.

Table 1 shows the result of evaluating the BDV characteristic of the multilayer electronic component by adjusting the content of magnesium (Mg) (relative to 100 moles of titanium (Ti)) included in the second region 111b when magnesium (Mg) is the element included in the second region 111b and not included in the first region 111a.

**[Table 1]**

| Test no. | Content of Mg in second region | BDV (V) |
|---|---|---|
| 1 | 0 mol | 72.05 |
| 2 | 1 mol | 81.53 |
| 3 | 2 mol | 83.89 |
| 4 | 3 mol | 84.44 |
| 5 | 4 mol | 84.63 |
| 6 | 5 mol | 83.21 |
| 7 | 6 mol | 69.83 |

Referring to Table 1, the BDV characteristic of the multilayer electronic component is improved when the content of magnesium (Mg) included in the second region 111b is 1 mole or more (relative to 100 moles of titanium (Ti)) when magnesium (Mg) is the element included in the second region 111b and not included in the first region 111a. In addition, referring to Test nos. 6 and 7, the BDV characteristic of the multilayer electronic component 100 is deteriorated when the content of magnesium (Mg) in the second region 111b is more than 5 moles (relative to 100 moles of titanium (Ti)). Therefore, as in an exemplary embodiment of the present disclosure, it is possible to improve the BDV characteristic of the multilayer electronic component 100 by adjusting the content of magnesium (Mg) included in the second region 111b to 1 mole or more and 5 moles or less (relative to 100 moles of titanium (Ti)).

Table 2 shows the result of evaluating the BDV characteristic of the multilayer electronic component by adjusting the content of silicon (Si) (relative to 100 moles of titanium (Ti)) included in the second region 111b when silicon (Si) is the element included in the second region 111b and not included in the first region 111a.

**[Table 2]**

| Test No. | Content of Si in second region | BDV (V) |
|---|---|---|
| 1 | 0 mol | 72.05 |
| 2 | 1 mol | 72.16 |
| 3 | 2 mol | 83.61 |
| 4 | 3 mol | 87.13 |
| 5 | 4 mol | 84.75 |
| 6 | 5 mol | 89.13 |
| 7 | 6 mol | 87.91 |
| 8 | 7 mol | 83.16 |
| 9 | 8 mol | 65.39 |

Referring to Table 2, the BDV characteristic of the multilayer electronic component is improved when the content of silicon (Si) included in the second region 111b is 2 mole or more (relative to 100 moles of titanium (Ti)) when silicon (Si) is the element included in the second region 111b and not included in the first region 111a. In addition, referring to Test nos. 8 and 9, the BDV characteristic of the multilayer electronic component 100 is deteriorated when the content of silicon (Si) in the second region 111b is more than 7 moles (relative to 100 moles of titanium (Ti)). Therefore, as in an exemplary embodiment of the present disclosure, it is possible to improve the BDV characteristic of the multilayer electronic component 100 by adjusting the content of silicon (Si) included in the second region 111b to 2 mole or more and 7 moles or less (relative to 100 moles of titanium (Ti)).

Table 3 shows the result of evaluating the high-temperature reliability of the multilayer electronic component by adjusting the content of manganese (Mn) included in the second region 111b (relative to 100 moles of titanium (Ti)) when manganese (Mn) is the element included in the second region 111b and not included in the first region 111a.

**[Table 3]**

| Test no. | Content of Mn in second region | MTTF (Hr) |
|---|---|---|
| 1 | 0 mol | 33.70 |
| 2 | 1 mol | 89.24 |
| 3 | 2 mol | 90.36 |
| 4 | 3 mol | 91.84 |
| 5 | 4 mol | 24.56 |

Referring to Table 3, the high-temperature reliability of the multilayer electronic component is significantly improved when the content of manganese (Mn) included in the second region 111b is 1 mole or more (relative to 100 moles of titanium (Ti)) when magnesium (Mg) is the element included in the second region 111b and not included in the first region 111a. In addition, referring to Test nos. 4 and 5, the high-temperature reliability of the multilayer electronic component 100 is significantly deteriorated when the content of manganese (Mn) in the second region 111b is more than 3 moles (relative to 100 moles of titanium (Ti)). Therefore, as in an exemplary embodiment of the present disclosure, it is possible to significantly improve the high-temperature reliability of the multilayer electronic component 100 by adjusting the content of manganese (Mn) included in the second region 111b to 1 mole or more and 3 moles or less (relative to 100 moles of titanium (Ti)) .

As set forth above, the present disclosure may provide the multilayer electronic component which may suppress the deterioration of the break down voltage (BDV) characteristic or the deterioration of the high-temperature reliability even when forming the margin portion for the step difference compensation by changing the type of elements included in the region of the dielectric layer that is included in the capacitance formation portion and the region of the dielectric layer that is included in the margin portion.

While the exemplary embodiments have been shown and described above, it will be apparent to those skilled in the art that modifications and variations could be made without departing from the scope of the present disclosure as defined by the appended claims.

## Claims

1. A multilayer electronic component comprising:
a body having first and second surfaces opposing each other in a first direction, third and fourth surfaces connected to the first and second surfaces and opposing each other in a second direction, and fifth and sixth surfaces connected to the first to fourth surfaces and opposing each other in a third direction, and including a dielectric layer and first and second internal electrodes alternately disposed in the first direction while having the dielectric layer interposed therebetween;
a first external electrode disposed on the third surface and connected to the first internal electrode; and
a second external electrode disposed on the fourth surface and connected to the second internal electrode,
wherein the body includes a capacitance formation portion where the first and second internal electrodes overlap each other in the first direction,
the body includes a first margin portion that is disposed on one side surface or the other side surface of the capacitance formation portion in the second direction and that includes an end of the first or second internal electrode,
the dielectric layer includes a first region disposed at a center region of the dielectric layer that is included in the capacitance formation portion, and a second region included in the first margin portion, and
at least one element of magnesium (Mg), silicon (Si), aluminum (Al), lithium (Li), copper (Cu), sodium (Na), bismuth (Bi), manganese (Mn), chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), erbium (Er), and dysprosium (Dy) is included in the second region, and not substantially included in the first region.

2. The component of claim 1, wherein the center region is from 1/5 point to 4/5 point when a region of the dielectric layer that is included in the capacitance formation portion is divided into five parts in the second direction, and is from 1/3 point to 2/3 point when the region of the dielectric layer that is included in the capacitance formation portion is divided into third parts in the first direction."

3. The component of claim 1, wherein magnesium (Mg) is the element included in the second region and not substantially included in the first region.

4. The component of claim 3, wherein the second region further includes titanium (Ti), and
a content of magnesium (Mg) included in the second region is 1 mole or more and 5 moles or less relative to 100 moles of titanium (Ti).

5. The component of claim 1, wherein the second region further includes titanium (Ti),
at least one of silicon (Si), aluminum (Al), lithium (Li), copper (Cu), sodium (Na), and bismuth (Bi) is the element included in the second region and not substantially included in the first region, and
a content of at least one of silicon (Si), aluminum (Al), lithium (Li), copper (Cu), sodium (Na), and bismuth (Bi), included in the second region, is 2 moles or more and 7 moles or less relative to 100 moles of titanium (Ti) .

6. The component of claim 5, wherein silicon (Si) is the element included in the second region and not substantially included in the first region.

7. The component of claim 1, wherein the second region further includes titanium (Ti),
at least one of manganese (Mn), chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy) is the element included in the second region and not substantially included in the first region, and
a content of at least one of manganese (Mn), chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy), included in the second region, is 1 mole or more and 3 moles or less relative to 100 moles of titanium (Ti).

8. The component of claim 7, wherein manganese (Mn) is the element included in the second region and not substantially included in the first region.

9. The component of claim 1, wherein the second region further includes titanium (Ti),
magnesium (Mg), silicon (Si), and manganese (Mn) are included in the second region and not substantially included in the first region, and
relative to 100 moles of titanium (Ti) included in the second region, a content of magnesium (Mg) included in the second region is 1 mole or more and 5 moles or less, a content of silicon (Si) included in the second region is 2 moles or more and 7 moles or less, and a content of manganese (Mn) included in the second region is 1 mole or more and 3 moles or less.

10. The component of claim 1, wherein the body further includes a second margin portion that is disposed on one surface or the other surface of the capacitance formation portion in the third direction,
the dielectric layer further includes a third region included in the second margin portion, and
at least one element of silicon (Si), aluminum (Al), lithium (Li), copper (Cu), sodium (Na), bismuth (Bi), manganese (Mn), chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy) is included in the third region, and not substantially included in the first region.

11. The component of claim 10, wherein the third region further includes titanium (Ti),
at least one of silicon (Si), aluminum (Al), lithium (Li), copper (Cu), sodium (Na), and bismuth (Bi) is the element included in the third region and not substantially included in the first region, and
a content of at least one of silicon (Si), aluminum (Al), lithium (Li), copper (Cu), sodium (Na), and bismuth (Bi), included in the third region, is 2 moles or more and 7 moles or less relative to 100 moles of titanium (Ti) .

12. The component of claim 11, wherein silicon (Si) is the element included in the third region and not substantially included in the first region.

13. The component of claim 10, wherein the third region further includes titanium (Ti),
at least one of manganese (Mn), chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy) is the element included in the third region and not substantially included in the first region, and
a content of at least one of manganese (Mn), chromium (Cr), vanadium (V), iron (Fe), nickel (Ni), cobalt (Co), tin (Sn), indium (In), gallium (Ga), zinc (Zn), lead (Pb), silver (Ag), palladium (Pd), platinum (Pt), Iridium (Ir), ruthenium (Ru), osmium (Os), yttrium (Y), erbium (Er), ytterbium (Yb), terbium (Tb), holmium (Ho), and dysprosium (Dy), included in the third region is 1 mole or more and 3 moles or less relative to 100 moles of titanium (Ti).

14. The component of claim 13, wherein manganese (Mn) is the element included in the third region and not substantially included in the first region.

15. The component of claim 10, wherein the third region further includes titanium (Ti),
magnesium (Mg), silicon (Si), and manganese (Mn) are included in the third region and not substantially included in the first region, and
relative to 100 moles of titanium (Ti) included in the third region, a content of magnesium (Mg) included in the third region is 1 mole or more and 5 moles or less, a content of silicon (Si) included in the third region is 2 moles or more and 7 moles or less, and a content of manganese (Mn) included in the third region is 1 mole or more and 3 moles or less.
